## Europäisches Patentamt

## European Patent Office

## Office européen des brevets

(11) Publication number: **0 173 234**
A1

# EUROPEAN PATENT APPLICATION

(21) Application number: 85110459.6

(22) Date of filing: 20.08.85

(51) Int. Cl.⁴: **B 25 J 13/08**, B 25 J 15/00

(30) Priority: 24.08.84 US 643995

(43) Date of publication of application: 05.03.86 Bulletin 86/10

(84) Designated Contracting States: CH DE FR GB LI

(71) Applicant: THE PERKIN-ELMER CORPORATION, 761 Main Avenue, Norwalk Connecticut 06859 (US)

(72) Inventor: Kendall-Tobias, Michael W., 3 Greenfield Avenue, Danbury Connecticut 06810 (US)

(74) Representative: Patentanwälte Grünecker, Kinkeldey, Stockmair & Partner, Maximilianstrasse 58, D-8000 München 22 (DE)

(54) Robotic grip assembly.

(57) The present invention is directed to a new and improved robotic grip assembly which includes a gripper mechanism for gripping a target object; a contact signal generating assembly associated with the gripper mechanism; and a slip signal generating assembly associated with the gripper mechanism. According to one aspect of the invention the assembly further includes circuitry responsive to the contact signal and the slip signal generating assemblies, and apparatus for controlling the opening and closing of the gripper means responsive to said circuitry, and apparatus for controlling the upward and downward movement of the gripper apparatus also responsive to said circuitry.

1

## ROBOTIC GRIP ASSEMBLY

### Field of Invention

The present invention relates generally to a robotic grip assembly and, in particular, relates to such an assembly including both a target contact sensor and a target slip sensor.

### Background of the Invention

In the rapidly expanding technology of robotics considerable effort is being expended towards the development of a robotic hand. The reason for this concentrated effort is that the robotic hand is the primary interface between a robot and the work-piece, or target object, which it is to manipulate. In fact, the usefulness of robotics in any particular environment is directly dependent upon the ability of the proposed robotic hand to pick up a particular object without dropping or crushing it. Presently, there is a distinct lack of an accurate and sensitive gripping ability and this is one reason present robots are used primarily in factory work. Hence, until a robotic hand can be accurately controlled with sensitivity it is quite likely to drop or crush rather expensive items. Thus, the available opportunities for use of robotics in many fields is quite limited.

0173234

## Summary of the Invention

Accordingly, it is one object of the present invention to provide a robotic grip assembly, which is both accurate and sensitive.

Briefly, the present invention is directed to a new and improved robotic hand or grip assembly which includes gripper means for gripping a target object, contact signal generating means associated with the gripper means, and slip signal generating means associated with the gripper. According to one aspect of the invention the assembly further comprises circuit means responsive to said contact signal generating means and said slip signal generating means, and means for controlling the opening and closing of the gripper means responsive to the circuit means, as well as means for controlling the upward and downward movement of the gripper means also responsive to said circuit means.

There has thus been outlined rather broadly the more important features of the invention in order that the detailed description thereof that follows may be better understood, and in order that the present contribution to the art may be better appreciated. There are, of course, additional features of the invention that will be described more fully hereinafter. Those skilled in the art will appreciate that the conception on which this disclosure is based may readily be utilized as the basis of the designing of other assemblies for carrying out the various purposes of the invention. It is important, therefore, that these disclosures be regarded as including such equivalent assemblies as do not depart from the spirit and scope of the invention.

Several embodiments of the invention have been chosen for purposes of illustration and description, and are shown in the accompanying drawings forming a part of the specification.

## Brief Description of the Drawings

Fig. 1 is a cross-sectional view of a slip sensor and contact sensor assembly embodying the principles of the present invention;

Fig. 2 is a perspective view of the embodiment of Fig. 1;

Fig. 3 is a cross-sectional view of a second embodiment of a slip sensor and contact sensor assembly according to the invention;

Fig. 4 is a cross-sectional view of a third embodiment of a slip sensor and contact sensor assembly according to the present invention; and

Fig. 5 is a block diagram of the controls for a robotic grip assembly according to the invention.

## Detailed Description of the Presently Preferred Embodiments of the Invention

For a more complete understanding of the present assembly it is necessary to conceptually define robotic grasping. The grasping of a target, or object, without crushing it or letting it slip can be solved by utilizing the minimal grip required to lift that object. Once the minimal grip required is known then other benefits also result, i.e. reduced motor loading and power consumption. Hence, as used herein the minimal, or appropriate grip is considered, and defined, as that grip which will retain an object, however fragile, without permitting that object to slip. Thus, a gripping assembly should have both a target contact sensor and a target slip sensor.

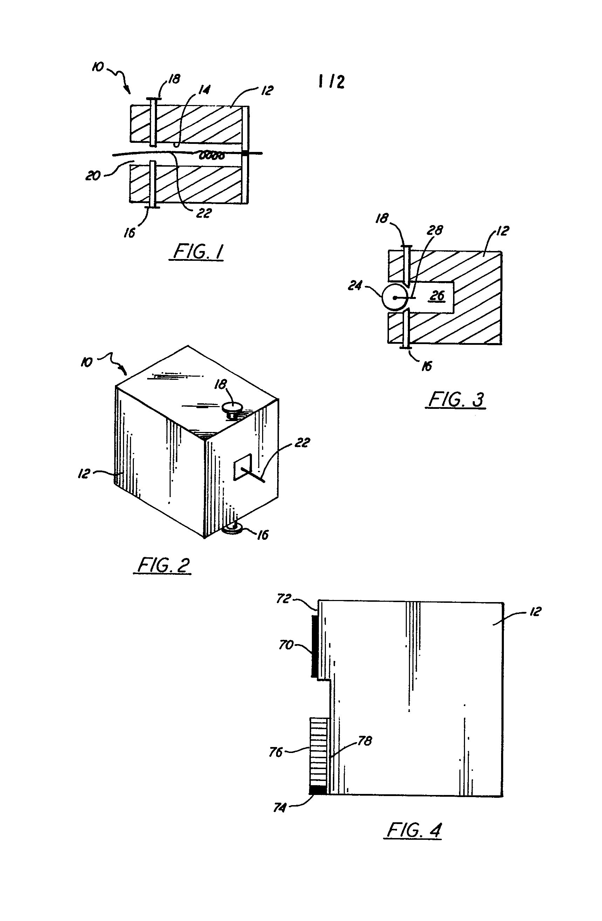

In one particular assembly, generally indicated at 10 in Fig. 1 and embodying the principles of the present invention, a housing 12, having a through bore 14 therein includes first and second electrical contacts, 16 and 18, which protrude slightly into the through bore 14 proximate one end 20 thereof. Preferably, the contacts 16 and 18 are colinear and oriented in a common vertical plane. The assembly 10 also includes a third contact 22, in the nature of a cat's whisker, formed by a thin electrically conductive spring wire that is mounted between the first and second contacts 16 and 18, respectively, and protrudes from said one end 20 of the through bore 14.

In this specific embodiment, the housing 12 as best seen in Fig. 2 is fabricated from any suitable material, such as polypropylene, for example. The housing in this specific embodiment is cube-shaped, measuring about 1 centimeter on each side. The through bore 14 has a diameter of about 2 millimeters and extends axially through the housing 12. The electrical contacts 16, 18 and 22 protrude from the housing for purposes of connection to their associated circuitry.

In operation, movement of the target object with respect to the housing 12 causes the spring wire contact 22 to engage either contact 16 or contact 18 depending upon the direction of movement. Engagement of the target object with the spring wire contact 22 serves as a contact switch. The function of these switches will be discussed more fully hereinafter.

In a second embodiment of the invention, as illustrated in Fig. 3, the wire 22 is replaced by a cylinder 24, which is designed to rotate between the electrical contacts 16 and 18 in a slot or groove 26 in the housing 12. This embodiment further includes a rigid contact wire 28 extending from the surface of the cylinder in such a manner that when the cylinder is rotated it contacts either the electrical contact 16 or the contact 18, depending on the rotation of direction. The cylinder itself may be of electrically conductive material so that it forms a third contact for purposes, which will be explained more fully hereinafter.

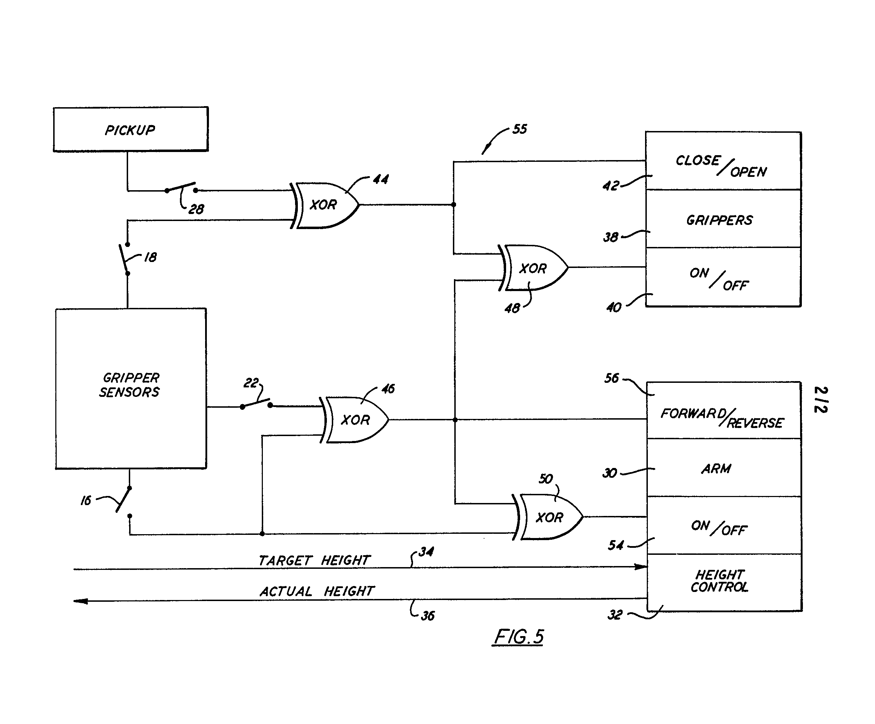

A solid-state slip sensor or signal generating means and contact sensor or signal generating means, relying on the piezoelectric effect is illustrated in Fig. 4. In this assembly, a contact signal generating means or piezoelectric transducer 70 is mounted on the housing 12 for sensing horizontal pressure caused by contact with the target object. The transducer is in the form of a polyvinylidene fluoride film (PVDF) operating in a 3-piezoelectric mode normal to its front plane 72. As a result contact by a target object with the transducer 70 causes closing of the switch 22 in Fig. 5. The vertical slip signal generating means or piezoelectric transducer 74 is oriented horizontally on the front face 72 of the housing 12. This transducer is also fabricated from (PVDF). A friction pad 76 is connected the film or transducer 74, but is separated from the housing 12 by a

0173234

ID-3222

teflon spacer 78. In operation, if a target object slips downwardly in contact with the sensor it will act downwardly on the friction pad 76 and as a result compress the transducer 74, thereby generating a piezoelectric signal which closes switch 16 in Fig. 5. If the target object slips upwardly it causes an expansion of the transducer 74, thereby generating a piezoelectric signal which closes switch 18 in Fig. 5.

Fig. 5 is a block-diagram of the controls for a robotic grip assembly according. to the invention. This assembly includes a slip sensor and a contact sensor having a contact switch 22 and slip switches 16 and 18. An activating pick-up switch 28 is also provided. A gripper 38 mounted on an arm 30 is included which has an on or off mechanism 40, and the direction of the gripper movement is controlled by an open or close controller 42. A gripper height controller 32 is provided which serves to move the gripper to a preselected height corresponding to an input signal indicated at 60 from an outside source such as a computer, for example. The height control 32 senses the actual height of the gripper and its arm and outputs a corresponding signal at 36. Overiding the height controller 32 is a gripper arm height actuator 54, which is an on or off mechanism and the direction of the gripper movement is controlled by a forward or reverse or, and up and down, direction controller 56. A gating arrangement indicated generally at 55 serves to synchronize the control of the gripper and its arm height and movements.

In operation, the first mode of operation is when the pick-up switch 28 is closed to initiate the gripping operation. When switch 28 is closed and switches 16, 18 and 22 are open, the gating arrangement 55 functions, as follows:

the output from XOR gate 44 is high; from XOR gate 46 is low; from XOR gate 48 is high; and from XOR gate 50 is low; as a result the gripper on/off mechanism 40 is on and the motion 42 of the gripper is toward its closed position; while at the same time the on/off arm mechanism 54 is off and its direction of movement is irrelevant. Consequently, at this time, the gripper and its arm are not moving up or down, but the gripper mechanism is closing toward the target object.

A second mode of operation of the assembly occurs when the gripper contacts the target object. At this point in time switches 22 and 28 are closed while switches 16 and 18 are open, and the gating arrangement 55 functions, as follows: the output from XOR gate 44 is high; from XOR gate 46 is high; from XOR gate 48 is low; and from XOR gate 50 is high; as a result the gripper on/off mechanism 40 is off and the direction of movement controller is irrelevant; while at the same time the on/off arm mechanism 54 is on and its direction of movement controller 56 is forward or upwardly. Unless there was slippage or some other controlling factor the gripper would be gripping the target object and moving it upwardly until the height control 32 indicated that the target input height 34 had been reached.

However, in the event that the target object being lifted slips with respect to the gripper, slip switch 16 closes. The following third mode of operation would prevail: switches 16, 22 and 28 are closed and switch 18 is open; the output from XOR gate 44 is high; from XOR gate 46 is low; from XOR gate 48 is high; and from XOR gate 50 is high; as a result the gripper on/off mechanism 40 is on and the motion 42 of the gripper is toward its closed position; while at the same time the on/off arm mechanism 54 is on and its direction of movement 56 is reverse or downwardly.

It is noted that mode steps 2 and 3 are repeated with the gripper closing mechanism closing a little further each time until the closing force on the target object is just sufficient to prevent slippage. The system will then remain in the second mode of operation.

Another capability of the robot assembly resides in the ability of a second gripper assembly to take a target object from the first gripper. For this operation the slip switch 18 is closed, which indicates that the target object is being moved upwardly by a second gripper and is slipping with respect to the first gripper. This is illustrated in a fourth mode of operation, as follows: switches 18, 22 and 28 are closed and switch 16 is open; the output from XOR gate 44 is low; from XOR gate 46 is high; from XOR gate 48 is high; and from XOR gate 50 is high; as a result the gripper on/off mechanism 40 is on and the motion 42 of the gripper is toward its open position; while at the same time the on/off arm mechanism 54 is on and its direction of command movement 56 is forward or upwardly. However, this later movement command could be irrelevant if the target object has already reached its target height, as directed by height controller 32. That is, the target object will not advance beyond its target height.

It will thus be seen that the present invention does indeed provide a new and improved robotic grip assembly, which enables an uninstructed robot to apply only the appropriate amount of pressure when picking up an object and to release an object at an appropriate time without specific command. The robot has been given, it may be said, a reflex action.

0173234
ID-3222

Although certain particular embodiments of the invention have been herein discloses for purposes of explanation, various modifications thereof, after study of the specification, will be apparent to those skilled in the art to which the invention pertains, and reference should accordingly be had to the appended claims in determining the scope of the invention.

## What is Claimed is:

1. A robot grip assembly comprising, in combination:

gripper means for gripping a target object;

contact signal generating means associated with said gripper means; and

slip signal generating means associated with said gripper means.

2. A robot grip assembly according to Claim 1 further comprising circuit means for closing said gripper means responsive to said slip signal generating means.

3. A robot grip assembly according to Claim 1 further comprising:

circuit means responsive to said contact signal generating means and said slip signal generating means;

means for controlling the opening and closing of said gripper means responsive to said circuit means; and

means for controlling the upward and downward movement of said gripper means responsive to said circuit means.

4. A robot grip assembly according to Claim 1 wherein said slip signal generating means comprises a housing; first and second electrical contacts mounted on said housing in spaced relationship one with respect to the other; and a conductive spring wire mounted between said contacts; said spring wire being engagable with one or the other of said contacts responsive to movement of said target object with respect to said housing.

5. A robot grip assembly according to Claim 1 wherein said slip signal generating means comprises a housing; first and second electrical contacts mounted on said housing in spaced relationship one with respect to the other; and a cylinder-like member mounted between said contact; said member carrying a protruding conductive element which is engagable with one or the other of said contacts responsive to rotation of said cylinder-like member when said target object is moved with respect to said housing.

6. A robot grip assembly according to Claim 1 wherein said slip signal generating means comprises a housing; a piezoelectric transducer mounted on said housing; a friction pad connected to said transducer; whereby movement of said target object acts on said friction pad to compress or expand said transducer.

7. A robot grip assembly comprising, in combination:

gripper means for gripping a target object;

first switch means for initiating pick-up movements;

second switch means for detecting contact between said target object and said gripper means;

third switch means for detecting slipping movement of said target object with respect to said gripper means in a first direction;

first circuit means for closing said gripper means when said first switch means is closed and said second and third switch means are open;

second circuit means for linearly moving said gripper means in a second direction substantially different from said first direction when said first and second switch means are closed and said third switch means is open; and

third circuit means for closing said gripper means and linearly moving said gripper means in said first direction when said first, second and third switch means are closed.

8. A robot grip assembly comprising, in combination:

gripper means for gripping a target object;

first switch means for initiating pick-up movements;

second switch means for detecting contact between said target object and said gripper means;

third switch means for detecting slipping movement of said target object with respect to said gripper means in a first direction;

fourth switch means for detecting slipping movement of said target object with respect to said gripper means in a second direction substantially different from said first direction;

first circuit means for closing said gripper means when said first switch means is closed and said second, third and fourth switch means are open;

second circuit means for linearly moving said gripper means in said second direction when said first and second switch means are closed and said third and fourth switch means are open;

third circuit means for closing said gripper means and linearly moving said gripper in said first direction when said first, second and third switch means are closed and said fourth switch means is open; and

fourth circuit means for opening said gripper means when said first and fourth switch means are closed and said second and third switch means are open.

FIG. 1

FIG. 3

FIG. 2

FIG. 4

FIG.5

0173234

0173234

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 332 147 (SIEMENS AG) * Page 6, lines 16-36; page 9, line 6 - page 10, line 22 * | 1,2 | B 25 J 13/08 B 25 J 15/00 |
| X | EP-A-0 112 729 (TOKYO SHIBAURA DENKI K.K.) * Claims 1,2 * | 1-3,7 8 | |
| X | DE-A-2 636 473 (MASCHINENFABRIK AUGSBURG NÜRNBERG) * Claims 1,2,4,8,9 * | 1,2 | |
| A | | 3,7,8 | |
| A | FR-A-2 306 798 (INTERNATIONAL BUSINESS MACHINES CORP.) * Page 3, lines 22-35 * | 4 | |
| A | AUTOMATICA, vol. 11, 1975, pages 567-570, Pergamon Press, Oxford, GB; R. TOMOVIC et al.: "Multifunctional terminal device with adaptive grasping force" * Figures 1-3; pages 568-569, paragraph: "Slippage transducers" * | 1,4,5 | TECHNICAL FIELDS SEARCHED (Int. Cl.4) B 25 J |
| A | GB-A-2 013 617 (ZARUDIANSKY) * Page 5, lines 43-50 * | 6 | |

The present search report has been drawn up for all claims

| Place of search | Date of completion of the search | Examiner |
|---|---|---|
| THE HAGUE | 02-12-1985 | LAMMINEUR P.C.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82